# EUROPEAN PATENT APPLICATION

(11) **EP 0 912 052 A1**
(43) Date of publication of application: **28.04.1999**
(21) Application number: 97402238.6
(22) Date of filing: 25.09.1997
(51) Int. Cl.: H04N 5/913

(54) **Method and apparatus for recording of encrypted digital data**

(71) Applicant: CANAL+ Société Anonyme, 75711 Paris Cedex 15 (FR)
(72) Inventor: Maillard, Michel, 28130 Maintenon (FR)
(74) Representative: Cozens, Paul Dennis

(57) **Abstract**

A method for transmission and recording of scrambled digital data in which scrambled data is transmitted together with a control word for descrambling of the digital data, the control word Ce itself being encrypted by a first key and transmitted in encrypted form, the scrambled digital data and encrypted control word being received by a decoder 2020 possessing an equivalent of the first key necessary to decrypt the encrypted control word, the decoder being further adapted to pass the digital data in its still scrambled form to a digital recording device 4005 and characterised in that the decrypted control word Ce for descrambling the scrambled data is thereafter re-encrypted by means of a second key C2 stored in a portable support device 4004 adapted to be received by the decoder 2020 and/or digital recording device 4005, the re-encrypted control word being recorded together with the scrambled data on the digital recording medium 4006. When replaying the recording, the control word is decrypted by means of the second key stored on the support means and thereafter used to descramble the recording.

## Description

The present invention relates to a method and apparatus for recording scrambled digital data, for example television broadcasts.

Transmission of encrypted data is well-known in the field of pay TV systems, where scrambled audiovisual information is broadcast typically by satellite to a number of subscribers, each subscriber possessing a decoder or receiver/decoder capable of descrambling the transmitted program for subsequent viewing.

In a typical system, scrambled digital data is transmitted together with a control word for descrambling of the digital data, the control word itself being encrypted by a first key and transmitted in encrypted form, the scrambled digital data and encrypted code word being received by a decoder possessing an equivalent of the first key necessary to decrypt the encrypted code word and thereafter descramble the transmitted data, the decoder being further adapted to pass the digital data in its still scrambled form to a digital recording device. A paid-up subscriber will receive on a monthly basis the key necessary to decrypt the encryted control word so as to permit viewing of a particular program.

With the advent of digital technology, the quality of the transmitted data has increased many times over. A particular problem associated with digital quality data lies in its ease of reproduction. Where a descrambled program is passed via an analogue link (e.g. the 〈〈 Peritel 〉〉 link) for viewing and recording by a standard VCR the quality remains no greater than that associated with a standard analogue cassette recording. The risk that such a recording may be used as a master tape to make pirate copies is thus no greater than with a standard shop bought analogue cassette.

By way of contrast, any descrambled digital data passed by a direct digital link to one of the new generation of digital recording devices (for example, a DVHS recorder) will be of the same quality as the originally transmitted program and may thus be reproduced any number of times without any degradation of image or sound quality. There is therefore a considerable risk that the descrambled data will be used as a master recording to make pirate copies, either further digital copies or even simple analogue VHS copies.

French Patent Application 95 03859 shows one of overcoming this problem, by means of a system in which descrambled digital data is never allowed to be recorded on the digital recording medium. Instead, the decoder described in this application records the data in its scrambled form on the recording medium, together with the control word necessary to descramble the data re-encrypted by means of another key. This new key is known only to the receiver/decoder and replaces the first key needed to obtain the code word for viewing of the program.

The advantage of such a system is that the data is never stored in a 〈〈 clear 〉〉 form and cannot be viewed without possession of the new key, stored in the receiver/decoder. The system also possesses the advantage that, since the first key changes on a monthly basis, the use of a constant key to re-encrypt the control word registered on the digital tape means that the receiver/decoder will still be able to decrypt the control word recorded on the tape even after the end of a subscription month.

The disadvantage of the system proposed in this patent application is that the recording can only be viewed in conjunction with that particular receiver/decoder. If that decoder breaks down, or is replaced, the recording can no longer be replayed. Equally, it is not possible to play the recording directly in a digital recorder without connecting the receiver/decoder in the system and a viewer must therefore maintain his subscription with the pay TV company in order to keep the decoder so as to be capable of viewing films already transmitted.

It is an object of the present invention to overcome the problems associated with this solution whilst keeping enabling secure recording of digital data that cannot be easily used to generate pirate copies of the transmitted data.

The present invention comprises a method for transmission and recording of scrambled digital data in which scrambled data is transmitted together with a control word for descrambling of the digital data, the control word itself being encrypted by a first key and transmitted in encrypted form, the scrambled digital data and encrypted control word being received by a decoder having access to an equivalent of the first key necessary to decrypt the encrypted control word, the decoder being further adapted to pass the digital data in its still scrambled form to a digital recording device and characterised in that the decrypted control word for descrambling the scrambled data is thereafter re-encrypted by means of a second key stored in a portable support device adapted to be received by the decoder, the re-encrypted control word being recorded together with the scrambled data on the digital recording medium.

In this way, the present invention overcomes the problems of the prior art since the subsequent replaying of the recorded data becomes independant of the identity of the decoder. When replaying the recording, the control word is decrypted by means of the second key stored on the support means and thereafter used to descramble the recording.

Replacement of the decoder will not invalidate the recording in question as long as the new decoder has a receptacle for receiving the support device containing the second key. If supplied with a reader for the support device, the digital recorder may itself read the second key and permit replaying of the data without the need for the decoder. Unlike the decoder, which is a relatively complex piece of equipment which may easily break down, the portable support device may be implemented in a simple resistant form.

In a particularly preferred embodiment the portable support device is a smart card adapted to be received in a smart card reader in the decoder and/or digital recorder. In this application the term 〈〈 smart card 〉〉 is used to mean any conventional chip-based card device possessing, for example, microprocessor or EEPROM memory for stocking the second key algorithm. Also included in this term are chip devices having alternative physical forms, for example key-shaped devices such as are often used in TV decoder systems.

In one embodiment, the smart card also contains the equivalent of the first key used to decrypt the control word for the initial descrambling of the data, eg for viewing in the case of a television broadcast system. In such a case, the smart card forms part of the pay TV system and may also contain a personalised key known to the transmitter to enable the transmitter to selectively identify which subscribers will receive an updated first key at the end of the month.

In an alternative embodiment, the second key is stored on a smart card different from that used to store the first key. In such an embodiment, reading of the information stored on the digital medium thus becomes completely separate from the subscriber system and, even after a subscriber has withdrawn from the system and his subscription card withdrawn, he may continue to watch previously recorded films provided the digital recorder/player that he possesses is adapted to read the accompanying smart card.

In such a system, a single smart card and second key may be used to generate the re-encrypted code word for a plurality of recordings. In such a way, a single 〈〈 library card 〉〉 can be used to decrypt any number of recordings.

In one embodiment, the smart card may also contain a number of credit units to determine how many times the recording may be replayed, the number of units being decremented with each subsequent partial or complete playing of the recording. These credit units may be downloaded in a message together with the transmitted first key, for example.

In one embodiment the credit units are associated with a particular segment of the recording such that playing a section of the recording, for example the first or last quarter hour of the recording will decrement certain credit units associated with these sections. Alternatively, the credit units are of a single type and are decremented with the playing of any section of the recording.

As discussed above, the present invention is particularly applicable to the case where the second key algorithm is stored on a smart card associated with the recording medium. However, in an alternative embodiment, the portable support is defined by the recording itself, the second key being stored in an integrated circuit embedded in the housing of the digital recording medium.

Such a technique has already been suggested, for example, in the case of DVHS cassettes where a set of metallic contacts may be provided on an exterior surface of the cassette housing, the contacts leading to an electronic circuit, such as an integrated circuit or chip in the interior of the housing. These contacts may be engaged by a corresponding set of contacts in the receptacle of the recorder to enable communication between the integrated circuit and the video recorder.

In such systems, security is still provided despite the fact that the key is carried with the recording, since the key may not easily be copied from within the embedded chip. The variations described above with regard to the smart card embodiments are equally applicable to systems in which the support is defined by the recording housing.

The present invention is particularly applicable to a method in which the scrambled data represents audiovisual data transmitted in a scrambled television broadcast.

The terms 〈〈 scrambled 〉〉 and 〈〈 encrypted 〉〉 and 〈〈 control word 〉〉 and 〈〈 key 〉〉 have been used here for the purpose of clarity of language. However, it will be understood that no fundamental distinction is to be made between 〈〈 scrambled data 〉〉 and 〈〈 encrypted data 〉〉 or between a 〈〈 control word 〉〉 and a 〈〈 key 〉〉.

Similarly, whilst the description refers to 〈〈 receiver/decoders 〉〉 and 〈〈 decoders 〉〉 it will be understood that the present invention applies equally to embodiments having a receiver integrated with the decoder as to a decoder unit functioning in combination with a physically separate receiver.

A preferred embodiment of the invention will now be described by way of example only and in relation to the attached figures, in which:
Figure 1 shows the overall architecture of a digital television system, as may be adapted by the present invention to interact with a digital recording device
Figure 2 shows the conditional access system of the television system of Figure 1 ;
Figure 3 shows the different levels of encryptage in the television system ;
Figure 4 shows the structure of a transmitted digital packet in the television system, including visual, audio and teletext data and an ECM message component ;
Figure 5 shows a first embodiment of the invention including a digital recording device and a smart card containing a second algorithm used to encrypt the code word to be registered on a digital video cassette ;
Figure 6 shows a second embodiment of the invention in which the smart card contains both the first and second keys necessary for viewing the transmitted and recorded program, respectively, together with credit units for determining the number of times a program may be watched ; and
Figure 7 shows a third embodiment of the invention in which the second key is stored on an integrated circuit mounted in the casing of the digital video cassette.

### Digital Television System

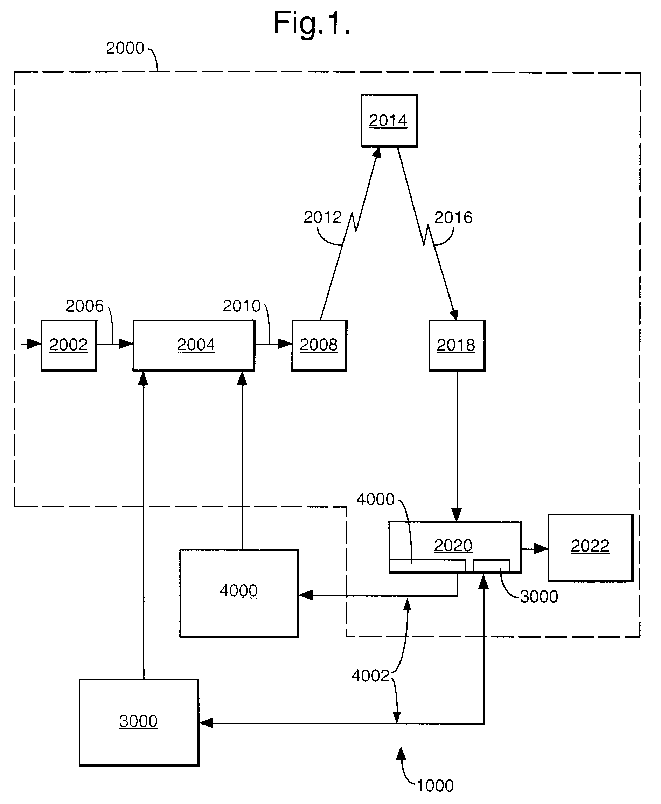

An overview of a digital television broadcast and reception system 1000 adaptable to the present invention is shown in Figure 1. The system includes a mostly conventional digital television system 2000 which uses the known MPEG-2 compression system to transmit compressed digital signals. In more detail, the MPEG-2 compressor 2002 in a broadcast centre receives a digital signal stream (typically a stream of video signals). The compressor 2002 is connected to a multiplexer and scrambler 2004 by linkage 2006. The multiplexer 2004 receives a plurality of further input signals, assembles one or more transport streams and transmits compressed digital signals to a transmitter 2008 of the broadcast centre via linkage 2010, which can of course take a wide variety of forms including telecom links. The transmitter 2008 transmits electromagnetic signals via uplink 2012 towards a satellite transponder 2014, where they are electronically processed and broadcast via notional downlink 2016 to earth receiver 2018, conventionally in the form of a dish owned or rented by the end user. The signals received by receiver 2018 are transmitted to an integrated receiver/decoder 2020 owned or rented by the end user and connected to the end user's television 2022. The receiver/decoder 2020 decodes the compressed MPEG-2 signal into a television signal for the television set 2022.

A conditional access system 3000 is connected to the multiplexer 2004 and the receiver/decoder 2020, and is located partly in the broadcast centre and partly in the decoder. It enables the end user to access digital television broadcasts from one or more broadcast suppliers. A smartcard, capable of decrypting messages relating to commercial offers (that is, on or several television programmes sold by the broadcast supplier), can be inserted into the receiver/decoder 2020. Using the decoder 2020 and smartcard, the end user may purchase events in either a subscripion mode or a pay-per-view-mode.

An interactive system 4000, also connected to the multiplexer 2004 and the receiver/decoder 2020 and again located partly in the broadcast and partly in the decoder, enables the end user to interact with various applications via a modemmed back channel 4002.

### Conditional Access System

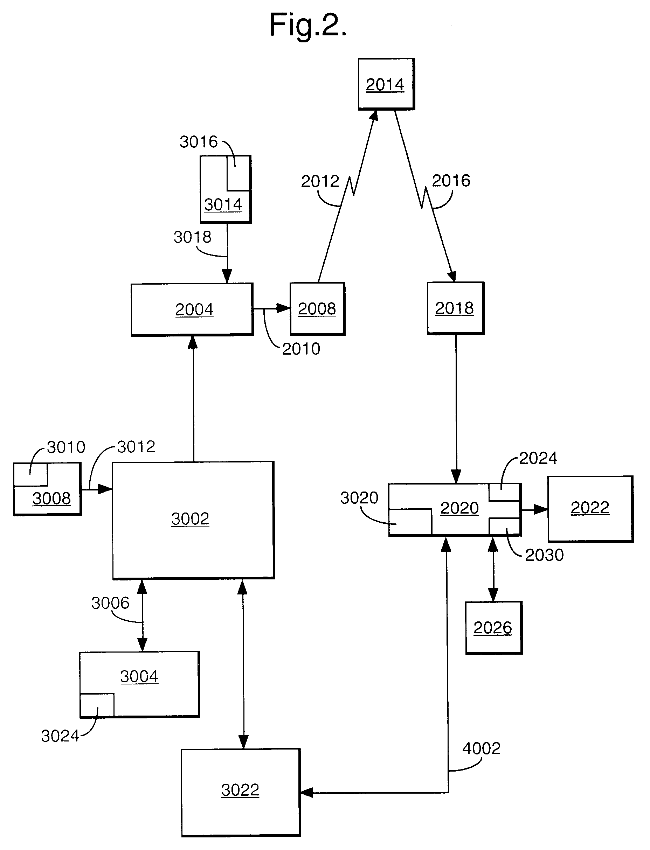

With reference to Figure 2, the conditional access system 3000 includes a Subscriber Authorization System (SAS) 3002. The SAS 3002 is connected to one or more Subscriber Management Systems (SMS) 3004, one SMS for each broadcast supplier, by a respective TCP-IP link 3006 (although other types of linkage could alternatively be used). Alternatively, one SMS could be shared between two broadcast suppliers, or one supplier could use two SMSs, and so on.

First encrypting units in the form of ciphering units 3008 utilising 〈〈 mother 〉〉 smartcards 3010 are connected to the SAS by linkage 3012. Second encrypting units again in the form of ciphering units 3014 utilizing mother smartcards 3016 are connected to the mutliplexer 2004 by linkage 3018. The receiver/decoder 2020 receives a 〈〈 daughter 〉〉 smartcard 3020. It is connected directly to the SAS 3002 by Communications Servers 3022 via the modemmed back channel 4002. The SAS sends amongst other things subscription rights to the daughter smartcard on request.

The smartcards contain the secrets of one or more commercial operators. The 〈〈 mother 〉〉 smartcard encrypts different kinds of messages and the 〈〈 daughter 〉〉 smartcards decrypt the messages, if they have the rights to do so.

The first and second ciphering units 3008 and 3014 comprise a rack, an electronic VME card with software stored on an EEPROM, up to 20 electronic cards and one smartcard 3010 and 3016 respectively, for each electronic card, one (card 3016) for encrypting the ECMs and one (card 3010) for encrypting the EMMS.

As will be described, ECMs or Entitlement Control Messages are encrypted messages embedded in the data stream of a transmitted program and which contain the control word necessary for descrambling of a program. Authorisation of a given receiver/decoder is controlled by EMMs or Entitlement Management. Messages, transmitted on a less frequent basis and which supply an authorized receiver/decoder with the key necessary to decode the ECM.

The operation of the conditional access system 3000 of the digital television system will now be described in more detail with reference to the various components of the television system 2000 and the conditional access system 3000.

### Multiplexer and Scrambler

With reference to Figures 1 and 2, in the broadcast centre, the digital video signal is first compressed (or bit rate reduced), using the MPEG-2 compressor 2002. This compressed signal is then transmitted to the multiplexer and scrambler 2004 via the linkage 2006 in order to be multiplexed with other data, such as other compressed data.

The scrambler generates a control word Ce used in the scrambling process and included in the MPEG-2 stream in the multiplexer 2004. The control word Ce is generated internally and enables the end user's integrated receiver/decoder 2020 to descramble the programme. Access criteria, indicating how the programme is commercialised, are also added to the MPEG-2 stream. The programme may be commercialised in either one of a number of 〈〈 subscription 〉〉 modes and/or one of a number of 〈〈 Pay Per View 〉〉 (PPV) modes or events. In the subscription mode, the end user subscribes to one or more commercial offers, of 〈〈 bouquets 〉〉, thus getting the rights to watch every channel inside those bouquets. In the preferred embodiment, up to 960 commercial offers may be selected from a bouquet of channels. In the Pay Per View mode, the end user is provided with the capability to purchase events as he wishes. This can be achieved by either pre-booking the event in advance (〈〈 pre-book mode 〉〉), or by purchasing the event as soon as it is broadcast (〈〈 impulse mode 〉〉).

Both the control word Ce and the access criteria are used to build an Entitlement Control Message (ECM); this is a message sent in relation with one scrambled program; the message contains a control word (which allows for the descrambling of the program) and the access criteria of the broadcast program. The access criteria and control word are transmitted to the second encrypting unit 3014 via the linkage 3018. In this unit an ECM is generated, encrypted with a first key Cex and transmitted on to the multiplexer and scrambler 2004.

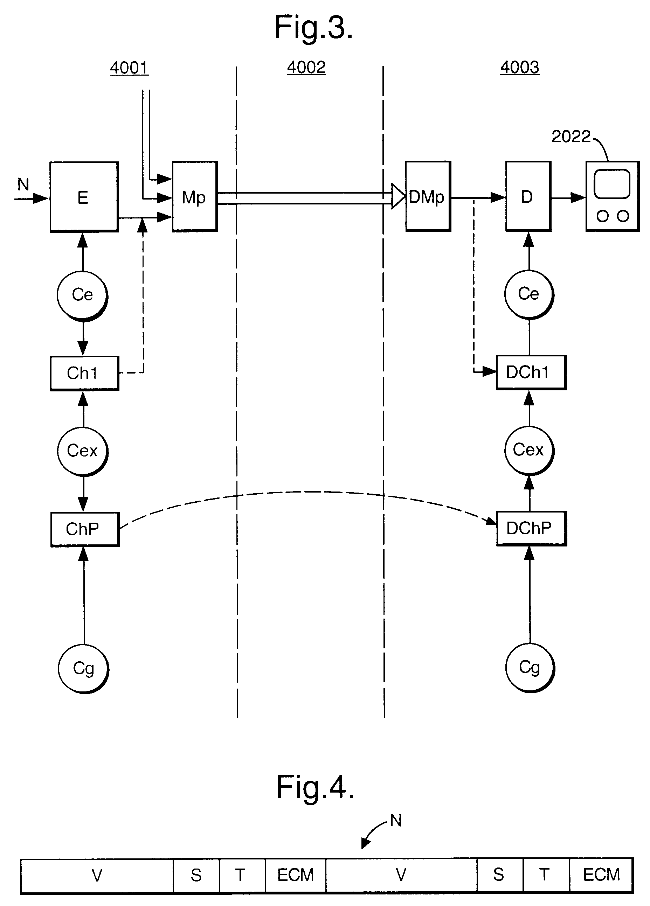

Each service broadcast by a broadcast supplier in a data comprises a number of distinct components; for example a television programme includes a video component V, an audio component S, a sub-title or teletext component T and so on (see figure 4). Each of these components of a service is individually scrambled and encrypted for subsequent broadcast to the transponder 2014. In respect of each scrambled component of the service, a separate ECM is required.

### Programme Transmission

The multiplexer 2004 receives electrical signals comprising encrypted EMMs from the SAS 3002, encrypted ECMs from the second encrypting unit 3014 and compressed programmes from the compressor 2002. The multiplexer 2004 scrambles the programmes and transmits the scrambled programmes, the encrypted EMM (if present) and the encryped ECMs as electric signals to a transmitter 2008 of the broadcast centre via linkage 2010. The transmitter 2008 transmits electromagnetic signals towards the satellite transponder 2014 via uplink 2012.

### Programme Reception

The satellite transponder 2014 receives and processes the electromagnetic signals transmitted by the transmitter 2008 and transmits the signals on to the earth receiver 2018, conventionally in the form of a dish owned or rented by the end user, via downlink 2016. The signals received by receiver 2018 are transmitted to the integrated receiver/decoder 2020 owned or rented by the end user and connected to the end user's television set 2022. The receiver/decoder 2020 demultiplexes the signals to obtain scrambled programmes with encrypted EMMs and encrypted ECMs.

If the programme is not scrambled the receiver/decoder 2020 decompresses the data and transforms the signal into a video signal for transmission to television set 2022.

If the programme is scrambled, the receiver/decoder 2020 extracts the corresponding ECM from the MPEG-2 stream and passes the ECM to the 〈〈 daughter 〉〉 smartcard 3020 of the end user. This slots into a housing in the receiver/decoder 2020. The daughter smartcard 3020 controls whether the end user has the right to decrypt the ECM and to access the programme.

If not, a negative status is passed to the receiver/decoder 2020 to indicate that the programme cannot be descrambled. If the end user does have the rights, the ECM is decrypted and the control word extracted. The decoder 2020 can then descramble the programme using this control word. The MPEG-2 stream is decompressed and translated into a video signal onward transmission to television set 2022.

The levels of encryption used will be described in more detail in relation to Figure 3 below.

### Subscriber Management System (SMS)

A subscriber Management System (SMS) 3004 includes a database 3024 which manages, amongst others, all of the end user files, commercial offers (such as tariffs and promotions), subscriptions, PPV details, and data regarding end user consumption and authorization. The SMS may be physically remote from the SAS

Each SMS 3004 transmits messages to the SAS 3002 via respective linkage 3006 to enable modifications to or creations of Entitlement Management Messages (EMMs) to be transmitted to end users.

The SMS 3004 also transmits messages to the SAS 3002 which imply no modifications or creations of EMMs but imply only a change in an end users's state (relating to the authorization granted to the end user when ordering products or to the amount that the end user will be charged).

### Entitlement Management Messages (EMMs)

The EMM is a message dedicated to an individual end user (subscriber), or a group of end users (in contrast with an ECM, which is dedicated to one scrambled programme only or a set of scrambled programmes if part of the same commercial offer). A group may contain a given number of end users. This organisation as a group aims at optimising the bandwitdth; that is, access to one group can permit the reaching of a great number of end users.

Various specific types of EMM are used in putting the present invention into practice. Individual EMMs are dedicated to individual subscribers, and are typically used in the provision of Pay Per View services; these contain the group identifier and the position of the subscriber in that group. So-called 〈〈 Group 〉〉 subscription EMMs are dedicated to groups of, say, 256 individual users, and are typically used in the administration of some subscription services. This EMM has a group identifier and a subscribers' group bitmap. Audience EMMs are dedicated to entire audiences, and might for example be used by a particular operator to provide certain free services. An 〈〈 audience 〉〉 is the totality of subscribers having smartcards which bear the same Operator Identifier (OPI). Finally, a 〈〈 unique 〉〉 EMM is addressed to the unique identifier of the smartcard.

### Encryption Levels of the System

Referring now to Figure 3, the encryption levels in the broadcast system will now be described. The stages of encryption associated with the broadcast of the digital data are shown at 4001, the transmission channel (eg a satellite link as described above) at 4002 and the stages of decryption at the receiver at 4003.

The digital data N is scrambled by a control word Ce before being transmitted to a multiplexer Mp for subsequent transmission. As will be seen from Figure 4, the transmitted data includes an ECM comprising, inter alia, the control word Ce as encrypted by an encrypter Ch1 controlled by a first encryption key Cex. At the receiver/decoder, the signal passes by a demultiplexer DMp and descrambler D before being passed to a television 2022 for viewing. A decryption unit DCh1 also possessing the key Cex decrypts the ECM in the demultiplexed signal to obtain the control word Ce subsequently used to descramble the signal.

For security reasons, the control word Ce embedded in the encrypted ECM changes on average every 10 seconds or so. In contrast, the first encryption key Cex used by the receiver to decode the ECM is changed every month or so by means of an EMM. The encryption key Cex is encrypted by a second unit ChP using a personalised key Cg corresponding to the identity of the decoder. If the decoder is one of those chosen to receive an updated key Cex, a decryption unit DChP in the decoder will decrypt the message using its key Cg to obtain that month's key Cex.

The decryption units DChp and DCh1 and the associated keys are held on a smart card provided to the subscriber and inserted in a smart card reader in the decoder. The keys may generated according to any known symmetric key algorithm, such as DES. Alternative embodiments using public/private key algorithms are equally possible.

### Recording of Digital Data

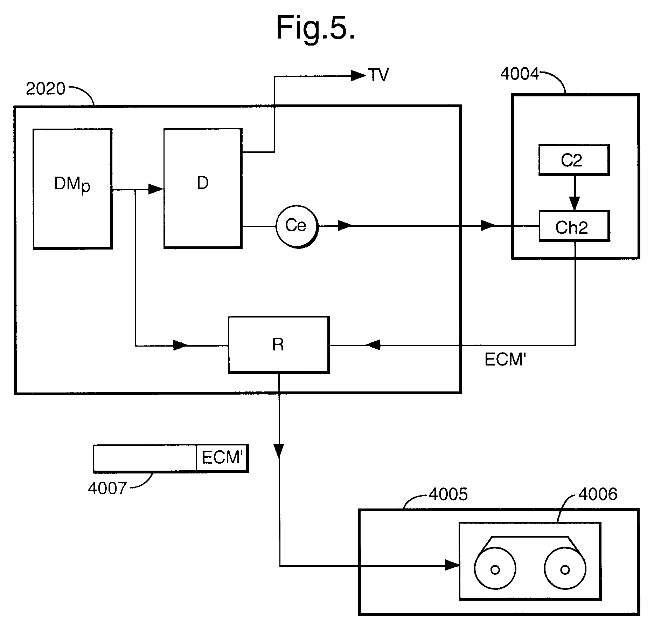

As set out in the introduction, it is inadvisable for descrambled digital data to be permitted to be recorded in view of the risks that arise in relation to unauthorised copying and piracy. As shown in Figure 5, the present invention provides a means for overcoming this problem.

The system comprises a smart card 4004, insertable in a smart card slot in the receiver/decoder, together with a digital recorder 4005, eg a DVHS recorder, including a digital recording medium 4006, such as a DVHS cassette.

The decoded control word Ce (together with any other data that forms the ECM, such as access control information etc) is passed to the microprocessor embedded in the smart card 4004. Using a second encryption key C2 and second encryption algorithm Ch2, the smart card generates a new ECM, indicated as ECM' in the figure. This entitlement message ECM' is then used to replace the ECM in the scrambled data stream from the demultiplexer DMp as shown at 4007 and the combination of scrambled data and new entitlement message ECM' are recorded on the DVHS cassette 4006. The entitlement message ECM' may be inserted in the data stream circulating a shift control register R.

By this means, the invention avoids recording decoded audiovisual information on the cassette. In order to play the cassette, the card is reinserted in the decoder, the key C2 is used to decode the entitlement message ECM', and the subsequently extracted control word Ce used to control the decoder to descramble the program for viewing.

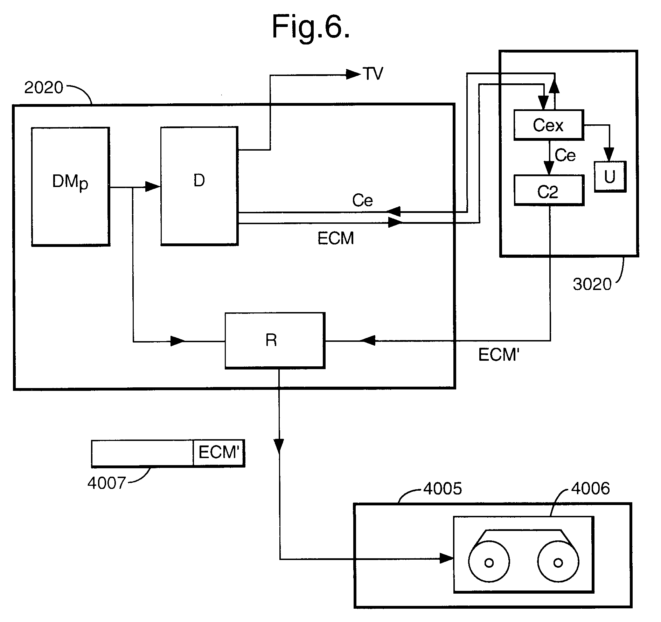

In the system shown in Figure 5 the smart card 4004 is different from the smart card 3020 shown in Figure 2 of the television system and which contains the encryption keys necessary for viewing of the program. However, in the alternative embodiment shown in Figure 6, the smart card 3020 contains both the first and second encryption keys Cex and C2 needed for viewing and recording the program. As represented, the key Cex controls the decryption of the ECM to generate the control word Ce used by the descrambler D to view the program and subsequently encrypted by the key C2 to form the new entitlement message ECM'.

The algorithms DCh1 and DCh2 have not been shown for reasons of space. The card 3020 is in fact usually also initialised with the personalised key Cg (not shown) enabling the decryption of EMMs so as to obtain that month's key Cex stored in the memory of the card. Although the smart card has been shown in the form of a substantially rectangular card, other physical forms, such as key shapes etc, are of course possible.

The ECM transmitted with the programme and decrypted by the card may also contain credit units U subsequently stored in the card and which control the number of times a recorded film may be viewed. In the simplest embodiment, the credit units may be decremented during the replaying of the recorded film every time an ECM' passes by the decoder. Once the number of credits has been decremented to zero, indicating the recording has been viewed a predetermined number of times, a message is sent to the decoder to prevent further viewings of the film, unless the credit units are recharged (by, for example, a charging instruction sent in an EMM).

In alternative embodiments, the credit units may be decremented every ten or hundred ECM' messages. In still further realisations, the credit units may correspond to certain sections of the film (for example the first or last 10 minutes of the film), such that playing these sections will decrement the credit units associated therewith. The sections can be identified by tagging the ECM' messages in these sections accordingly.

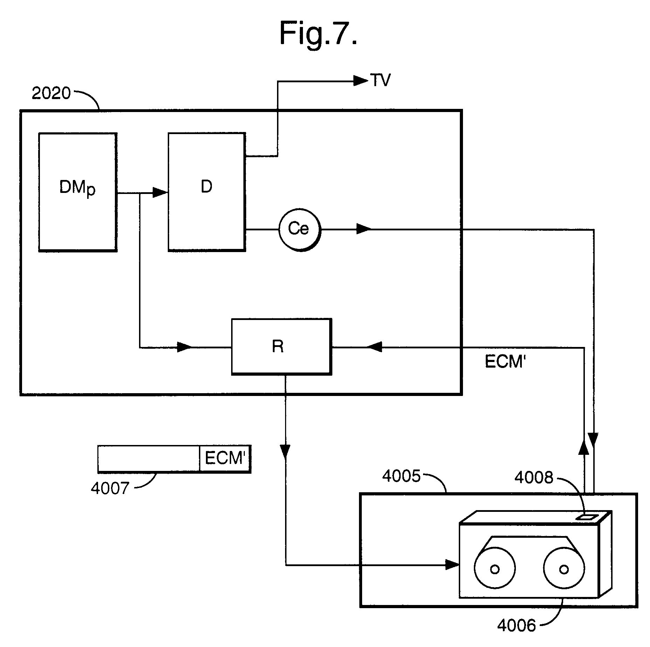

A further embodiment of the invention is shown in Figure 7. In this embodiment, the generation of the new entitlement message EMM' is controlled by an integrated circuit or chip 4008 possessing the second encryption key C2 and embedded in the casing of the recorded cassette 4006. Incorporation of a microprocessor within the housing of the recording medium is a known technique and has been suggested for example in the case of DVHS cassettes. In this example, a set of metallic contacts may be provided on an exterior surface of the cassette housing, the contacts leading to an electronic circuit, such as an integrated circuit or chip in the interior of the housing. These contacts may be engaged by a corresponding set of contacts in the receptacle of the recorder to enable communication between the integrated circuit and the video recorder.

As will be appreciated, whilst it is straightforward to copy the recorded (and scrambled) digital data, the data stored in the chip will be resistant to copying and, as with the previous embodiments, the scrambled data will be useless without the key C2 necessary to unlock the ECM' to obtain the control word used by the descrambler.

As will be understood, in all embodiments described, the elements of the receiver/decoder and the digital recording device may be combined or interchanged, such that the digital recorder possesses a smart card slot for receiving a smart card, for example, and/or the necessary elements to descramble the program once the control word Ce has been extracted from the ECM' message.

## Claims

1. A method for transmission and recording of scrambled digital data in which scrambled data is transmitted together with a control word for descrambling of the digital data, the control word itself being encrypted by a first key and transmitted in encrypted form, the scrambled digital data and encrypted control word being received by a decoder having access to an equivalent of the first key necessary to decrypt the encrypted control word, the decoder being further adapted to pass the digital data in its still scrambled form to a digital recording device and characterised in that the decrypted control word for descrambling the scrambled data is thereafter re-encrypted by means of a second key stored in a portable support device adapted to be received by the decoder, the re-encrypted control word being recorded together with the scrambled data on the digital recording medium.

2. A method as claimed in claim 1 in which the portable support device is a smart card adapted to be received in a smart card reader in the decoder and/or digital recorder.

3. A method as claimed in claim 2 in which the smart card also contains the equivalent of the first key used to decrypt the control word for the initial descrambling of the data.

4. A method as claimed in claim 2 in which the second key is stored on a smart card different from the means used by the decoder to store the first key.

5. A method as claimed in any of claims 2 to 4 in which a single smart card and second key are used to generate the re-encrypted code word for a plurality of recordings.

6. A method as claimed in any of claims 2 to 5 in which the smart card also contains a number of credit units to determine how many times the recording may be replayed, the number of units being decremented with each subsequent partial or complete playing of the recording.

7. A method as claimed in claim 6 in which the credit units are associated with a particular segment of the recording such that playing a section of the recording decrements certain credits associated with that section.

8. A method as claimed in claim 7 in which the credit units are of a single type and are decremented with the playing of any section of the recording.

9. A method as claimed in claim 1 in which the portable support is defined by the recording medium itself, the second key being stored in an integrated circuit embedded in the housing of the digital recording medium.

10. An apparatus adapted for transmission and recording of scrambled digital data as claimed in any of claims 1 to 9 comprising a transmitter for scrambling and transmitting digital data together with a control word for descrambling of the digital data encrypted by a first key and transmitted in encrypted form, a decoder for receiving the scrambled digital data and encrypted code word and having access to an equivalent of the first key necessary to decrypt the encrypted code word, and a portable support device adapted to be received by the decoder and possessing a second key for re-encrypting the decrypted code word, the re-encrypted code word together with the scrambled data being sent by the decoder to a digital recording device for recordal on a digital recording medium.

11. A decoder for the apparatus of claim 11 and adapted for use in the method of any of claims 1 to 9 including a receptacle for receiving a portable support device possessing a second key for re-encrypting the decrypted code word.

12. A decoder as claimed in claim 11 integrated with a digital recording device for registering the re-encrypted code word and scrambled data on a digital recording medium.
